# EUROPEAN PATENT APPLICATION

(11) **EP 4 492 649 A1**
(43) Date of publication of application: **15.01.2025**
(21) Application number: 22931025.5
(22) Date of filing: 29.11.2022
(51) Int. Cl.: H02K 9/19

(54) **DEVICE**

(30) Priority: 10.03.2022 JP 2022037189
(71) Applicant: Jatco Ltd., Shizuoka 417-8585 (JP)
(72) Inventor: TANAKA, Daiki, Fuji City, Shizuoka 417-8585 (JP); MAEDA, Atsushi, Fuji City, Shizuoka 417-8585 (JP); KOYAMA, Akihiro, Fuji City, Shizuoka 417-8585 (JP); ISHII, Shigeru, Fuji City, Shizuoka 417-8585 (JP)
(74) Representative: Hoefer & Partner Patentanwälte mbB
(86) International application number: PCT/JP2022/044064
(87) International publication number: WO 2023/171053

(57) **Abstract**

[PROBLEM] Resistance to rotation of a motor is reduced.

[SOLUTION] A device includes: a rotation electrical machine including a rotor and a stator surrounding an outer periphery of the rotor; and a case surrounding an outer periphery of a stator core of the stator, a liquid is supplied to an upper portion of the stator core, a guide portion that guides the liquid to one side in a direction of a rotation axis of the rotor is provided on an inner periphery of the case in a direction along the direction of the rotation axis, when viewed from the direction of the rotation axis, the guide portion is located above a horizontal line passing through the rotation axis, and one end of the guide portion in the direction of the rotation axis is disposed outside a vertical line passing through an air gap between a rotor core of the rotor and the stator core when viewed from the direction of the rotation axis.

## Description

### TECHNICAL FIELD

The present invention relates to a device.

### BACKGROUND ART

Patent Document 1 discloses a device including an oil cooling type motor.

### PRIOR ART DOCUMENT

### PATENT DOCUMENT

Patent Document 1: JP 2020-120556 A

### SUMMARY OF INVENTION

### PROBLEM TO BE SOLVED BY THE INVENTION

The motor includes a rotor core and a stator core that surrounds an outer periphery of the rotor core. An air gap is provided between the stator core and the rotor core.

For example, when a cooling liquid is supplied directly to a motor, such as an oil cooling type motor, a part of the liquid may enter the air gap between the stator core and the rotor core. If the liquid enters the air gap, the liquid creates resistance to rotation of the motor.

Therefore, there is a demand for reducing the resistance to the rotation of the motor.

### SOLUTIONS TO THE PROBLEMS

A device according to an aspect of the present invention includes:
a rotation electrical machine including a rotor and a stator surrounding an outer periphery of the rotor; and
a case surrounding an outer periphery of a stator core of the stator, in which
a liquid is supplied to an upper portion of the stator core,
a guide portion that is configured to guide the liquid to one side in a direction of a rotation axis of the rotor is provided on an inner periphery of the case in a direction along the direction of the rotation axis,
when viewed from the direction of the rotation axis, the guide portion is located above a horizontal line passing through the rotation axis, and
one end of the guide portion in the direction of the rotation axis is disposed outside a vertical line passing through an air gap between a rotor core of the rotor and the stator core when viewed from the direction of the rotation axis.

### ADVANTAGEOUS EFFECTS OF INVENTION

According to an aspect of the present invention, it is possible to reduce resistance to rotation of a motor.

### BRIEF DESCRIPTION OF DRAWINGS

[FIG. 1] FIG. 1 is a schematic cross-sectional view of a driving device.
[FIG. 2] FIG. 2 shows enlarged views of main parts of the driving device.
[FIG. 3] FIG. 3 is a schematic view of a cross section taken along a line A-A in FIG. 1.
[FIG. 4] FIG. 4 is a schematic view of a cross section taken along a line B-B in FIG. 3.
[FIG. 5] FIG. 5 is an exploded perspective view of the driving device.
[FIG. 6] FIG. 6 is a view illustrating a guide portion.
[FIG. 7] FIG. 7 shows views illustrating the guide portion.
[FIG. 8] FIG. 8 is a view illustrating a guide portion according to a first modification.
[FIG. 9] FIG. 9 is a view illustrating the guide portion according to the first modification.
[FIG. 10] FIG. 10 is a view illustrating a guide portion according to another modification.
[FIG. 11] FIG. 11 is a view illustrating the guide portion according to the other modification.
[FIG. 12] FIG. 12 is a view illustrating the guide portion according to the other modification.
[FIG. 13] FIG. 13 is a view illustrating a guide portion according to a comparative example.
[FIG. 14] FIG. 14 is a view illustrating the guide portion according to the comparative example.

### DESCRIPTION OF EMBODIMENTS

In the present embodiment, a driving device 1 for a vehicle will be described as an aspect of a device. The driving device 1 includes a motor 2, which is a rotation electrical machine, as a driving source.

If a drawing shows that a plurality of elements (member, portion, or the like) are arranged in a predetermined direction, it can be considered that in explanation of the description, there is a sentence illustrating that the plurality of elements overlap when viewed from the predetermined direction. The "predetermined direction" is, for example, an axial direction, a radial direction, a gravity direction, or a vehicle traveling direction (vehicle forward direction and vehicle backward direction).

"When viewed from a predetermined direction, a first element (member, portion, or the like) is positioned between a second element (member, portion, or the like) and a third element (member, portion, or the like)" means that the first element can be observed to be between the second element and the third element when viewed from the predetermined direction. The "predetermined direction" is, for example, an axial direction, a radial direction, a gravity direction, or a vehicle traveling direction (vehicle forward direction and vehicle backward direction).

For example, when the second element, the first element, and the third element are arranged in this order along the axial direction, it can be said that the first element is positioned between the second element and the third element when viewed from the radial direction. If a drawing shows that a first element is between a second element and a third element when viewed from a predetermined direction, it can be considered that in explanation of the description, there is a sentence illustrating that the first element is between the second element and the third element when viewed from the predetermined direction.

When two elements (member, portion, or the like) overlap when viewed from the axial direction, the two elements are coaxial.

The "axial direction" means an axial direction of a rotation axis of a member that constitutes the device. The "radial direction" means a direction orthogonal to the rotation axis of the member that constitutes the device. A "circumferential direction" refers to a circumferential direction about the rotation axis of the member that constitutes the device. The member is, for example, a motor, a gear mechanism, or the like.

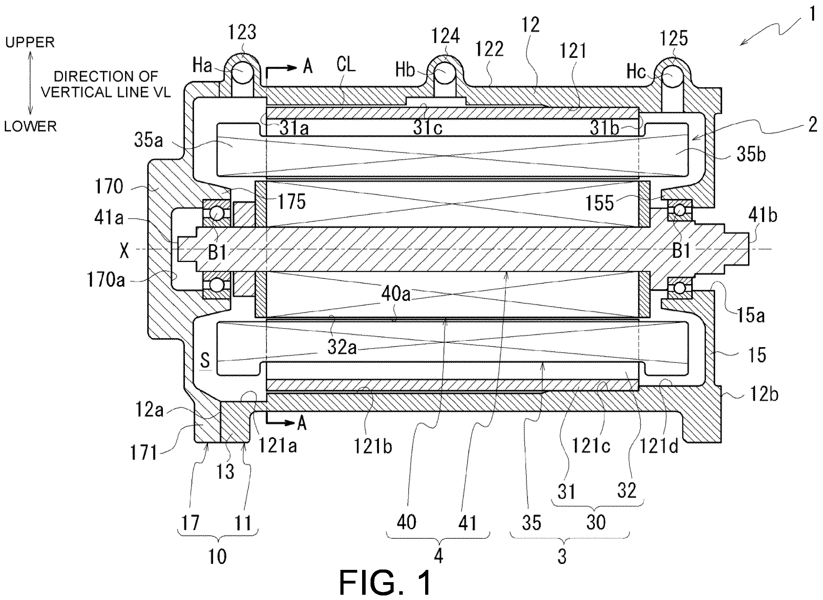

FIG. 1 is a schematic cross-sectional view of the driving device 1.

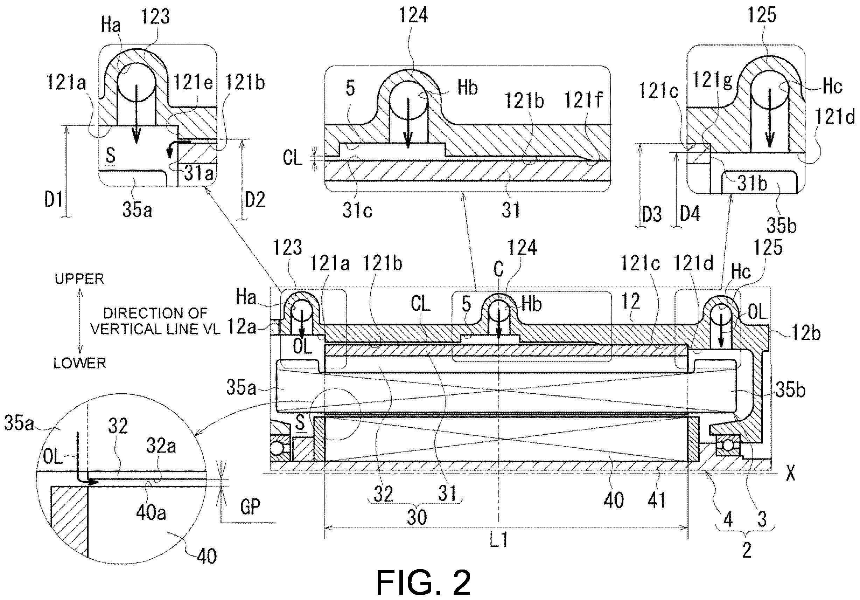

FIG. 2 shows enlarged views of main parts of the driving device 1.

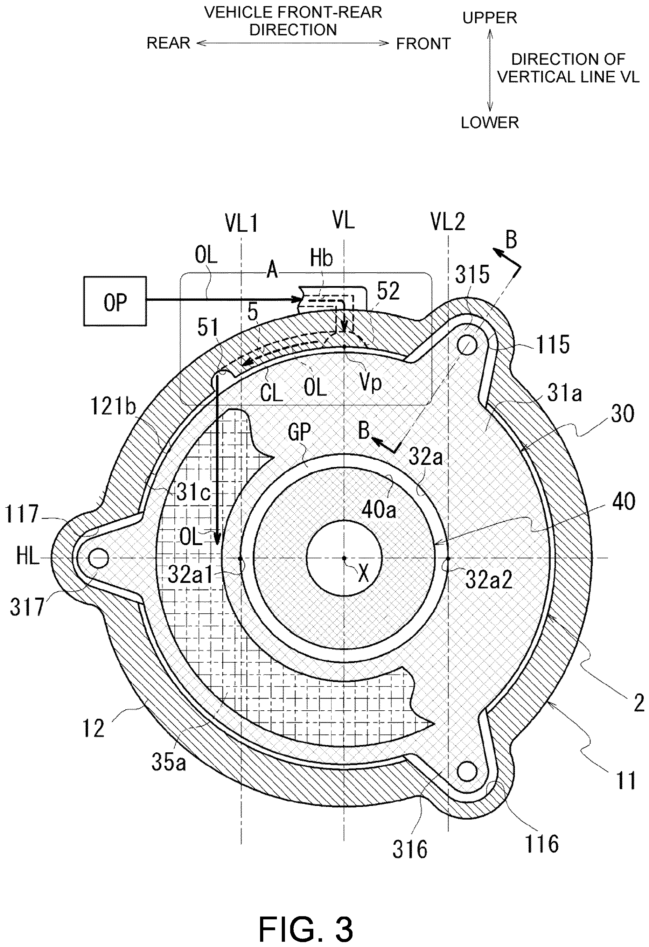

FIG. 3 is a schematic view of a cross section taken along a line A-A in FIG. 1. FIG. 3 corresponds to a schematic view of a cut surface of a case portion 11 in FIG. 1 cut along a plane that is flush with a tip portion 51 of a guide portion 5, which will be described later. In FIG. 3, for convenience of description, regions of a stator core 30 and a rotor core 40 are indicated by cross-hatching, and a part of a region in which a coil end 35a is provided is indicated by cross-hatching of imaginary lines.

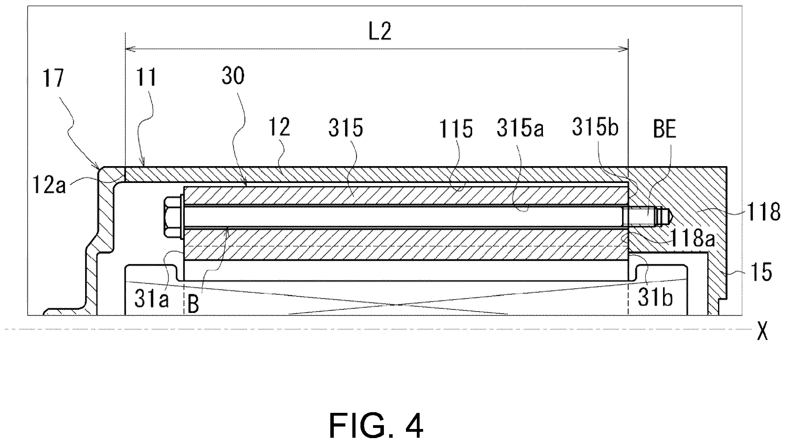

FIG. 4 is a schematic view of a cross section taken along a line B-B in FIG. 3.

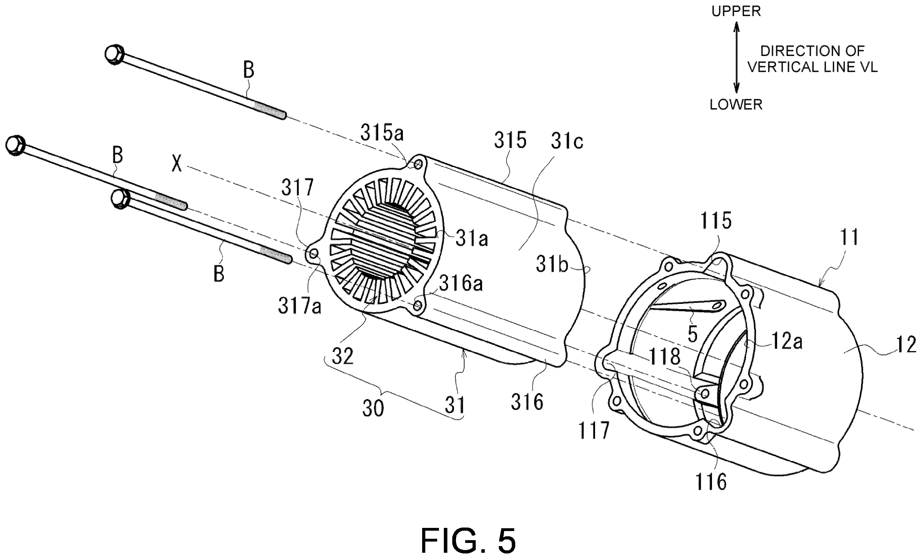

FIG. 5 is an exploded perspective view of the driving device 1. In FIG. 5, illustration of a coil 35 and a rotor 4 is omitted.

In the drawings, a direction of a vertical line VL and a direction of a horizontal line HL are directions based on a state in which the driving device 1 is mounted on a vehicle (not shown). The direction of the horizontal line HL is also a horizontal line along the vehicle front-rear direction.

As shown in FIG. 1, the driving device 1 includes the motor 2 and a motor case 10 that accommodates the motor 2. The motor 2 is an oil cooling type motor. The motor 2 has at least one of an electric motor function and a generator function.

The motor 2 includes the rotor 4 and a stator 3 that surrounds an outer periphery of the rotor 4 with a gap therebetween.

The rotor 4 includes the rotor core 40 and a motor shaft 41.

The rotor core 40 is formed by laminating a plurality of silicon steel sheets. Each of the silicon steel sheets is externally fitted to the motor shaft 41 in a state in which relative rotation with the motor shaft 41 is restricted.

The stator 3 includes the stator core 30 and the coil 35.

The stator core 30 is formed by laminating a plurality of electromagnetic steel sheets.

The stator core 30 includes a yoke portion 31 and teeth portions 32. The yoke portion 31 has a cylindrical shape. The teeth portions 32 protrude from an inner periphery of the yoke portion 31 toward the rotor core 40. A plurality of the teeth portions 32 are provided on the inner periphery of the yoke portion 31. The plurality of teeth portions 32 are arranged at equal intervals in a circumferential direction around a rotation axis X (see FIG. 5).

The coil 35 is formed by winding a winding wire around the teeth portion 32. A length of the coil 35 in a direction of the rotation axis X is longer than those of the stator core 30 and the rotor core 40 by lengths of coil ends 35a and 35b protruding in the direction of the rotation axis X (see FIG. 1).

The coil 35 may be formed by winding a winding wire around each of the plurality of teeth portions 32 in a distributed manner or a concentrated manner.

As shown in the enlarged region of FIG. 2, an inner peripheral surface 32a of the teeth portion 32 of the stator core 30 faces an outer peripheral surface 40a of the rotor core 40 from an outer diameter side in a radial direction of the rotation axis X. A radial gap (air gap: GP) of the rotation axis X is ensured between the inner peripheral surface 32a of the teeth portion 32 and the outer peripheral surface 40a of the rotor core 40.

In the following description, the "inner peripheral surface 32a of the teeth portion 32" is also referred to as the "inner peripheral surface 32a of the stator core 30".

As shown in FIG. 3, the stator core 30 is provided with three boss portions 315, 316, and 317. The boss portions 315, 316, and 317 protrude outward in the radial direction of the rotation axis X from an outer peripheral surface 31c (see FIGS. 1 and 5) of the yoke portion 31.

The three boss portions 315, 316, and 317 are provided at equal intervals in the circumferential direction around the rotation axis X. The boss portions 315, 316, and 317 extend from one end 31a to the other end 31b of the yoke portion 31 along the direction of the rotation axis X (see FIGS. 4 and 5).

In the following description, the "outer peripheral surface 31c of the yoke portion 31" is also referred to as the "outer peripheral surface 31c of the stator core 30". The "one end 31a of the yoke portion 31" is also referred to as "one end 31a of the stator core 30". Further, "the other end 31b of the yoke portion 31" is also referred to as "the other end 31b of the stator core 30".

As shown in FIG. 5, the boss portions 315, 316, and 317 have insertion holes 315a, 316a, and 317a for a bolt B formed therein, respectively. The insertion holes 315a, 316a, and 317a penetrate the boss portions 315, 316, and 317 in the direction of the rotation axis X, respectively.

In the present embodiment, an example is shown in which the three boss portions 315, 316, and 317 are provided on an outer periphery of the yoke portion 31, but the number of boss portions is not limited to this aspect.

As shown in FIG. 3, when viewed from the direction of the rotation axis X, among the boss portions 315, 316, and 317, the boss portion 315 is disposed above the horizontal line HL that intersects with the rotation axis X of the stator core 30, and on a vehicle front side (right side in the figure) when viewed from the rotation axis X. The boss portion 316 is disposed below the horizontal line HL and on the vehicle front side (right side in the figure) when viewed from the rotation axis X. The boss portion 317 is disposed at a position intersecting with the horizontal line HL and on a vehicle rear side (left side in the figure) when viewed from the rotation axis X.

The disposition of the boss portions 315, 316, and 317 is not limited to those illustrated in FIGS. 3 and 5. The disposition of the boss portions can be changed as appropriate depending on a total number of bosses and other components disposed within the case portion 11, which will be described later.

As shown in FIG. 1, the motor 2 of the driving device 1 is accommodated in the motor case 10.

The motor case 10 is formed by assembling the case portion 11 and a cover portion 17 in the direction of the rotation axis X. An accommodating chamber (motor chamber S) of the motor 2 is formed inside the motor case 10.

As shown in FIG. 1, the cover portion 17 includes a wall portion 170 orthogonal to the rotation axis X, and a flange-shaped joining portion 171 that surrounds an outer peripheral edge of the wall portion 170. A support hole 170a of the motor shaft 41 is provided in a portion of the wall portion 170 intersecting with the rotation axis X.

In the wall portion 170 of the cover portion 17, a motor support portion 175 surrounding the support hole 170a is provided on a surface on a motor 2 side (right side in the figure). The motor support portion 175 has a tubular shape. The motor support portion 175 surrounds the rotation axis X with a gap therebetween.

An outer periphery of the motor shaft 41 on one end 41a side is supported by an inner periphery of the motor support portion 175 via a bearing B1.

As shown in FIG. 1, the case portion 11 includes a tubular peripheral wall portion 12 and a wall portion 15. The peripheral wall portion 12 has a tubular shape surrounding the rotation axis X. One end 12a of the peripheral wall portion 12 in the direction of the rotation axis X is opened, and the other end 12b is closed by the wall portion 15.

Therefore, the case portion 11 is formed in a bottomed tubular shape. In the case portion 11, the motor 2 is accommodated inside the peripheral wall portion 12.

A flange-shaped joining portion 13 is provided at the one end 12a of the peripheral wall portion 12. The joining portion 171 of the cover portion 17 is joined to the joining portion 13 from the direction of the rotation axis X. The joining portion 13 and the joining portion 171 are connected by a bolt (not shown).

As shown in FIG. 1, the wall portion 15 is provided in a direction orthogonal to the rotation axis X. A through hole 15a is provided in a region of the wall portion 15 which intersects with the rotation axis X. A motor support portion 155 surrounding the through hole 15a is provided on a surface of the wall portion 15 on the motor 2 side (left side in the figure).

The motor support portion 155 has a tubular shape. The motor support portion 155 surrounds the rotation axis X with a gap therebetween. The outer periphery of the motor shaft 41 on the other end 41b side is supported by an inner periphery of the motor support portion 155 via the bearing B1. The motor shaft 41 penetrates the wall portion 15. The other end 41b of the motor shaft 41 is connected to a rotation transmission mechanism (not shown) within a gear case (not shown) attached to the case portion 11. Here, the rotation transmission mechanism is, for example, a gear mechanism that transmits output rotation of the motor 2.

As shown in FIG. 3, the peripheral wall portion 12 of the case portion 11 is provided with accommodation portions 115, 116, and 117. The boss portions 315, 316, and 317 of the stator core 30 described above are accommodated in the accommodation portions 115, 116, and 117, respectively.

The accommodation portions 115, 116, and 117 protrude outward in the radial direction of the rotation axis X from an outer periphery of the peripheral wall portion 12. The accommodation portions 115, 116, and 117 are provided with openings facing an inside of the case portion 11 (rotation axis X side).

FIG. 3 illustrates a case in which accommodation portions (accommodation portions 115, 116, and 117) are provided in the case portion 11 in the same number as the three boss portions 315, 316, and 317 in the stator core 30. A total number of the accommodation portions is not limited to that of an aspect shown in FIG. 3. The total number of the accommodation portions can be appropriately changed according to a total number of the boss portions on a stator core 30 side.

The accommodation portions 115, 116, and 117 have the same configuration. Therefore, in the following, the configuration of the accommodation portion 115 will be described as a representative example.

As shown in FIG. 4, the accommodation portion 115 extends in the direction of the rotation axis X in the peripheral wall portion 12. The accommodation portion 115 is formed with a length L2 in the direction of the rotation axis X that allows the boss portion 315 on the stator core 30 side to be accommodated. The same applies to the other accommodation portions 116 and 117.

An abutting portion 118 is provided on a wall portion 15 side (right side in the figure) of the accommodation portion 115 in the direction of the rotation axis X. The abutting portion 118 is provided at a position overlapping with the accommodation portion 115 in the direction of the rotation axis X. The abutting portion 118 includes an abutting surface 118a that is orthogonal to the rotation axis X. The abutting surface 118a is a flat surface that is orthogonal to the rotation axis X. The abutting surface 118a functions as a bottom wall on the wall portion 15 side of the accommodation portion 115.

As shown in FIGS. 4 and 5, when the stator core 30 is inserted into the case portion 11, the stator core 30 is positioned at a position in which an end surface 315b of the boss portion 315 abuts against the abutting surface 118a. In this state, a tip BE side of the bolt B inserted into the insertion hole 315a is screwed into the abutting portion 118, whereby the stator core 30 is fixed to the case portion 11.

As shown in FIG. 1, an inner diameter of an inner peripheral surface 121 of the peripheral wall portion 12 gradually decreases toward the wall portion 15 side (right side in the figure). In the inner peripheral surface 121 of the peripheral wall portion 12, four inner peripheral surface regions (first inner peripheral surface 121a, second inner peripheral surface 121b, third inner peripheral surface 121c, and fourth inner peripheral surface 121d) are arranged from one end 12a toward the other end 12b in the direction of the rotation axis X.

Specifically, as shown in FIG. 2, the first inner peripheral surface 121a on the one end 12a side of the peripheral wall portion 12 is formed with the largest inner diameter D1.

The second inner peripheral surface 121b located adjacent to the first inner peripheral surface 121a is formed with an inner diameter D2 smaller than that of the first inner peripheral surface 121a (D2 < D1).

The third inner peripheral surface 121c located adjacent to the second inner peripheral surface 121b is formed with an inner diameter D3 smaller than that of the second inner peripheral surface 121b (D3 < D2).

The fourth inner peripheral surface 121d located adjacent to the third inner peripheral surface 121c is formed with an inner diameter D4 smaller than that of the third inner peripheral surface 121c (D4 < D3).

As shown in the enlarged region of FIG. 2, a step surface 121e between the first inner peripheral surface 121a and the second inner peripheral surface 121b is a flat surface orthogonal to the rotation axis X. An inclined surface 121f between the second inner peripheral surface 121b and the third inner peripheral surface 121c is a tapered surface in which an inner diameter decreases from the second inner peripheral surface 121b toward the third inner peripheral surface 121c. A step surface 121g between the third inner peripheral surface 121c and the fourth inner peripheral surface 121d is a flat surface orthogonal to the rotation axis X.

As shown in FIG. 5, the stator core 30 is inserted into the peripheral wall portion 12 from the opening on the one end 12a side of the peripheral wall portion 12.

As shown in FIG. 2, the third inner peripheral surface 121c is formed with the inner diameter D3 that matches the outer peripheral surface 31c of the stator core 30. The first inner peripheral surface 121a and the second inner peripheral surface 121b are respectively formed with the inner diameters D1 and D2 slightly larger than that of the outer peripheral surface 31c of the stator core 30.

Therefore, while the other end 31b of the stator core 30 is located between the first inner peripheral surface 121a and the second inner peripheral surface 121b, the stator core 30 is loosely fitted into the peripheral wall portion 12. Accordingly, the stator core 30 can be smoothly inserted into the peripheral wall portion 12.

As described above, the inclined surface 121f is located between the second inner peripheral surface 121b and the third inner peripheral surface 121c. Further, the inner diameter of the inclined surface 121f decreases toward the third inner peripheral surface 121c (right side in the figure).

Therefore, when the stator core 30 is further pushed into the peripheral wall portion 12 after the other end 31b of the stator core 30 reaches the inclined surface 121f, the other end 31b side of the stator core 30 moves while sliding on the inclined surface 121f. Accordingly, the stator core 30 and the peripheral wall portion 12 are aligned with each other.

The insertion of the stator core 30 into the peripheral wall portion 12 ends when the other end 31b of the stator core 30 abuts against the step surface 121g. Accordingly, the stator core 30 is positioned at a position where the other end 31b abuts against the step surface 121g. In this state, only the outer peripheral surface 31c of the stator core 30 on the other end 31b side is fitted to the third inner peripheral surface 121c. Accordingly, the stator core 30 is held in a state in which the other end 31b side is supported in a cantilever manner by the peripheral wall portion 12.

As shown in FIG. 2, an entire length L1 of the stator core 30 in the direction of the rotation axis X substantially matches a length in the direction of the rotation axis X from the second inner peripheral surface 121b to the third inner peripheral surface 121c in the peripheral wall portion 12. When the other end 31b of the stator core 30 abuts against the step surface 121g of the peripheral wall portion 12, the one end 31a of the stator core 30 is disposed flush with the step surface 121e of the peripheral wall portion 12.

In this state, the coil ends 35a and 35b of the stator core 30 are disposed with a gap in the radial direction of the rotation axis X with respect to the first inner peripheral surface 121a and the fourth inner peripheral surface 121d, respectively.

As described above, the first inner peripheral surface 121a and the second inner peripheral surface 121b of the peripheral wall portion 12 are respectively formed with the inner diameters D1 and D2 slightly larger than that of the outer peripheral surface 31c of the stator core 30.

Therefore, on the one end 31a side of the stator core 30, there is a gap CL between the outer peripheral surface 31c of the stator core 30 and an inner periphery (first inner peripheral surface 121a and second inner peripheral surface 121b) of the peripheral wall portion 12.

As shown in FIG. 2, as described above, the third inner peripheral surface 121c is formed with the inner diameter D3 that matches the outer peripheral surface 31c of the stator core 30, and thus this gap CL is opened only to the one end 31a side (left side in the figure). The gap CL communicates with a motor chamber S on the one end 31a side.

In the present embodiment, cooling oil OL is passed through the gap CL on the outer periphery of the stator core 30 to cool the motor 2.

Therefore, as shown in FIG. 1, ribs 123, 124, 125 that supply the cooling oil OL are provided on an upper portion of the peripheral wall portion 12.

These ribs 123, 124, and 125 are provided at positions above the gap CL in the direction of the vertical line VL based on an installation state of the driving device 1 in the vehicle. The ribs 123, 124, 125 protrude upward from an outer peripheral surface 122 of the peripheral wall portion 12. The ribs 123, 124, and 125 are arranged in this order from the one end 12a side to the other end 12b side of the peripheral wall portion 12 in the direction of the rotation axis X.

The ribs 123, 124, and 125 are provided with oil holes Ha, Hb, and He, respectively. The cooling oil OL that cools the stator 3 is supplied from a pump (not shown) to the oil holes Ha, Hb, and Hc.

As shown in FIG. 2, the oil hole Ha is opened to the first inner peripheral surface 121a of the peripheral wall portion 12. The oil hole Ha is provided at a position overlapping with the coil end 35a in the direction of the vertical line VL.

The oil hole He is opened to the fourth inner peripheral surface 121d of the peripheral wall portion 12. The oil hole He is provided at a position overlapping with the coil end 35b in the direction of the vertical line VL.

The oil hole Hb is opened to the second inner peripheral surface 121b of the peripheral wall portion 12. The oil hole Hb is provided at a position that is approximately middle between the one end 31a and the other end 31b of the stator core 30 in the direction of the rotation axis X. Specifically, the oil hole Hb faces the outer peripheral surface 31c of the stator core 30 on an intermediate line C passing through a middle between the one end 31a and the other end 31b in the direction of the rotation axis X.

Here, the cooling oil OL supplied from the oil holes Ha, He is supplied to the coil ends 35a, 35b of the coil 35 from above in the direction of the vertical line VL. The cooling oil OL supplied to the coil ends 35a and 35b moves downward in the direction of the vertical line VL in a region in which the coil ends 35a and 35b are provided by own weight. At this time, the coil ends 35a and 35b are cooled by heat exchange with the cooling oil OL.

The cooling oil OL supplied from the oil hole Hb is supplied to the gap CL between the outer peripheral surface 31c of the stator core 30 and the inner peripheral surface 121 of the peripheral wall portion 12. As described above, the gap CL is open only at the one end 31a of the stator core 30. Therefore, most of the cooling oil OL supplied to the gap CL moves toward the one end 31a (see an arrow in FIG. 2). Further, a part of the cooling oil OL moves circumferentially around the rotation axis X along the outer periphery of the stator core 30 and moves downward in the direction of the vertical line VL.

Accordingly, when the cooling oil OL moves in the gap CL of the outer peripheral surface 31c of the stator core 30, the stator core 30 is cooled by the heat exchange with the cooling oil OL.

The cooling oil OL that has reached the one end 31a of the stator core 30 is discharged into the motor chamber S (see FIG. 2).

As shown in FIG. 3, when viewed from the direction of the rotation axis X, the air gap GP between the stator core 30 and the rotor core 40 is located below the oil hole Hb at the one end 31a of the stator core 30.

Therefore, among the cooling oil OL that has reached the one end 31a of the stator core 30 from a rear side of the paper to a front side of the paper, the cooling oil OL dropping downward from a region close to the vertical line VL (region between vertical lines VL1 and VL2 in FIG. 3) moves across the air gap GP from an upper side to a lower side.

Thus, a part of the cooling oil OL that moves across the air gap GP may enter the air gap GP (see FIG. 2). In this case, the entering cooling oil OL becomes resistance against relative rotation around the rotation axis X between the stator core 30 and the rotor core 40.

In the present embodiment, in order to reduce an amount of the cooling oil OL entering the air gap GP, the guide portion 5 that guides the cooling oil OL discharged into the gap CL in a predetermined direction is provided on the inner peripheral surface 121 of the peripheral wall portion 12.

Hereinafter, the guide portion 5 will be described.

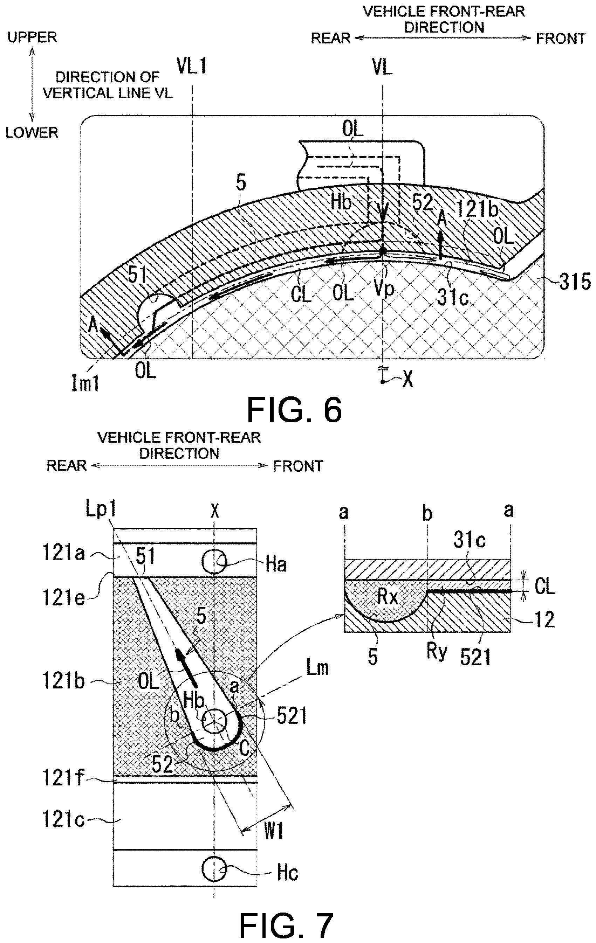

FIGS. 6 and 7 are views illustrating the guide portion 5.

FIG. 6 is an enlarged schematic view of a region A in FIG. 3. In FIG. 6, in order to clarify positions of a base end portion 52 side of the guide portion 5 and the oil hole Hb, the base end portion 52 side of the guide portion 5 and the oil hole Hb are indicated by dashed lines.

FIG. 7 is an unfolded view of the guide portion 5 as viewed from a direction of an arrow A-A in FIG. 6. In FIG. 7, the guide portion 5 is shown diagrammatically, and in order to make a range of the guide portion 5 easier to see, a region of the second inner peripheral surface 121b of the peripheral wall portion 12 is shown with cross-hatching.

Further, in order to describe an opening of the guide portion 5 and an area of the gap CL, the extracted view in FIG. 7 is a schematic diagram showing a periphery as viewed from the intermediate line C expanded over a range of 360° from a position indicated by a symbol a in the figure in a counterclockwise direction through a position indicated by a symbol b and back to the position indicated by the symbol a.

As shown in FIG. 7, the guide portion 5 is a recessed groove provided in the region of the second inner peripheral surface 121b of the peripheral wall portion 12.

The guide portion 5 is provided in a range extending from the region in which the oil hole Hb is opened to the step surface 121e along the direction of the rotation axis X. Here, the step surface 121e is a boundary between the second inner peripheral surface 121b and the first inner peripheral surface 121a.

As shown in FIG. 7, when viewed from the rotation axis X side, the base end portion 52 of the guide portion 5 has a substantially circular shape larger than that of the oil hole Hb. The guide portion 5 extends linearly along a straight line Lp1 up to the step surface 121e. The guide portion 5 is formed in a tapered shape such that a width W1 in a direction orthogonal to the straight line Lp1 becomes narrower as approaching the tip portion 51 on the step surface 121e side.

When viewed from the radial direction of the rotation axis X, the straight line Lp1 is inclined with respect to the rotation axis X in a direction such that a distance from the rotation axis X increases toward the step surface 121e. In the present embodiment, the guide portion 5 is provided such that the tip portion 51 of the guide portion 5 is located further rearward in the vehicle than the base end portion 52, based on the installation state of the driving device 1 on the vehicle.

As shown in FIG. 3, when viewed from the direction of the rotation axis X, the guide portion 5 is located above the horizontal line HL passing through the rotation axis X in the direction of the vertical line VL.

As shown in FIG. 6, when viewed from the direction of the rotation axis X, the guide portion 5 is located on a virtual circle Im 1 having the rotation axis X as a center thereof.

As shown in FIG. 3, the guide portion 5 extends from a position intersecting with the vertical line VL along the circumferential direction about the rotation axis X to approach the accommodation portion 117. The extending direction of the guide portion 5 is also a direction away from the accommodation portion 115 along the circumferential direction about the rotation axis X.

The guide portion 5 is provided across a region between the vertical line VL1 and the vertical line VL from the vehicle front side to the vehicle rear side. Here, the vertical line VL1 is a vertical line passing through an intersection point 32a1 between the inner peripheral surface 32a of the stator core 30 and the horizontal line HL (see FIG. 3). The vertical line VL is a vertical line passing through the rotation axis X (see FIG. 3). The vertical line VL1 and the vertical line VL are parallel to each other.

As shown in FIG. 3, when viewed from the direction of the rotation axis X, the tip portion 51 of the guide portion 5 is opened on the vehicle rear side relative to the vertical line VL1. The tip portion 51 is located on the vehicle rear side when viewed from the rotation axis X. The base end portion 52 of the guide portion 5 is located at an apex Vp of the inner peripheral surface 121, which is an intersection point between the vertical line VL and the second inner peripheral surface 121b. The tip portion 51 of the guide portion 5 is located lower than the base end portion 52 in the direction of the vertical line VL.

As shown in FIG. 6, when viewed from the direction of the rotation axis X, the guide portion 5 is formed to have a substantially semicircular cross section.

In the present embodiment, a cross-sectional shape of the base end portion 52 of the guide portion 5 is set such that most of the cooling oil OL supplied from the oil hole Hb flows toward the guide portion 5 than the gap CL on the outer periphery of the stator core 30.

Specifically, an opening area of the base end portion 52 of the guide portion 5 is set to be larger than an opening area of a portion of the gap between the outer periphery of the stator core 30 and the second inner peripheral surface 121b. A shape of the recessed groove of the guide portion 5 is not limited to a semicircular shape shown in FIG. 6. For example, the recessed groove may be U-shaped or V-shaped when viewed from the direction of the rotation axis X.

Hereinafter, an action and effect of the guide portion 5 in the driving device 1 having a configuration in which the guide portion 5 is provided on the inner periphery of the case portion 11 will be described.

As shown in FIG. 1, when the coil 35 is energized in order to drive the motor 2 of the driving device 1, the coil 35 generates heat by the energization. As the coil 35 generates the heat, a temperature of the entire stator 3 including the stator core 30 increases.

As shown in FIG. 2, in the driving device 1, an oil pump (not shown) is driven by the drive of the motor 2, and the cooling oil OL of the motor 2 is supplied into the case portion 11 from the oil holes Ha, Hb, and He. The cooling oil OL supplied from the oil holes Ha and He cools the coil ends 35a and 35b by the heat exchange with the coil ends 35a and 35b when passing through the regions of the coil ends 35a and 35b.

The cooling oil OL supplied from the oil hole Hb is supplied from the apex Vp (see FIG. 6) of the peripheral wall portion 12 toward the gap CL between the outer peripheral surface 31c of the stator core 30 and the second inner peripheral surface 121b.

Here, as shown in FIG. 7, when viewed from the radial direction of the rotation axis X, the oil hole Hb is provided in a positional relationship such that the oil hole Hb overlaps with the base end portion 52 of the guide portion 5. Further, as shown in the unfolded view of FIG. 7, an opening area Rx on the guide portion 5 side viewed from the intermediate line C is larger than an opening area Ry of the other region 521 not connected to the guide portion 5. The other region 521 not connected to the guide portion 5 is a region on the vehicle front side of a straight line Lm. The straight line Lm is a straight line that passes through the intermediate line C and is orthogonal to the straight line Lp1.

Therefore, most of the cooling oil OL supplied from the oil hole Hb into the case portion 11 flows through the guide portion 5 rather than the gap CL.

Most of the cooling oil OL flowing into the guide portion 5 is pushed by the cooling oil OL sequentially supplied from the oil hole Hb, and thereby moves from the base end portion 52 side toward the tip portion 51 side in the guide portion 5.

As shown in FIG. 6, when viewed from the direction of the rotation axis X, the tip portion 51 of the guide portion 5 is located lower than the base end portion 52 in the direction of the vertical line VL. Further, as shown in FIG. 3, a region of the outer peripheral surface 31c of the stator core 30, which faces the guide portion 5 in the direction of the vertical line VL is a region above the horizontal line HL passing through the rotation axis X. In this region, in a cross-sectional view orthogonal to the rotation axis X, the outer peripheral surface 31c of the stator core 30 has an arc shape with an apex thereof facing upward, so that the cooling oil OL can easily move downward in the direction of the vertical line VL along the outer peripheral surface 31c.

Accordingly, the cooling oil OL supplied to the base end portion 52 side of the guide portion 5 moves in the guide portion 5 toward the tip portion 51 while accelerating a moving speed thereof by the own weight. Further, since the cooling oil OL in the guide portion 5 is pushed by the cooling oil OL sequentially supplied from the oil hole Hb, the cooling oil OL moves more quickly from the base end portion 52 toward the tip portion 51.

Accordingly, most of the cooling oil OL supplied from the oil hole Hb is discharged from the tip portion 51 into the motor chamber S through the guide portion 5.

Here, a part of the cooling oil OL discharged from the oil hole Hb into the gap CL between the outer peripheral surface 31c of the stator core 30 and the inner peripheral surface 121 of the peripheral wall portion 12 flows in an opposite direction to the guide portion 5 (direction of a thin arrow in FIG. 6).

As shown in FIG. 6, the boss portion 315 is located on the vehicle front side relative to the oil hole Hb. The boss portion 315 bulges outward in the radial direction from the outer peripheral surface 31c, and thus movement toward the vehicle front side of the cooling oil OL moving in the gap CL in a direction (right direction in the figure) away from the guide portion 5 is prevented by the boss portion 315. The cooling oil OL, which is prevented from moving further toward the vehicle front side by the boss portion 315, is returned to the guide portion 5 side (thin arrow in the figure).

Accordingly, the cooling oil OL supplied from the oil hole Hb reliably flows toward the guide portion 5.

As shown in FIG. 3, the cooling oil OL discharged from the tip portion 51 of the guide portion 5 linearly falls downward in the direction of the vertical line VL by the own weight thereof. Further, the tip portion 51 of the guide portion 5 is provided at a position offset outward from the vertical line VL1 (toward the vehicle rear side) in the radial direction of the rotation axis X.

A region outward of the vertical line VL1 in the radial direction of the rotation axis X is a region in which the air gap GP of the motor 2 is not located below the gap CL. Accordingly, even if the cooling oil OL guided by the guide portion 5 and discharged from the tip portion 51 falls downward in the direction of the vertical line VL due to the own weight thereof, the cooling oil OL falls downward at a position that does not cross the air gap GP. That is, in the case of FIG. 3, the cooling oil OL discharged from the tip portion 51 falls downward in a region on a left side of the air gap GP. Accordingly, the cooling oil OL that flows into the front side of the paper from the gap CL is less likely to enter the air gap GP.

The tip portion 51 of the guide portion 5 is open at a position far away from the vertical line VL in the direction of the horizontal line HL. Therefore, a moving distance of the cooling oil OL is longer than that in the case in which the cooling oil OL supplied from the oil hole Hb moves through the gap CL in the direction of the rotation axis X (toward the front side in FIG. 3). Accordingly, a contact time between the cooling oil OL and the stator core 30 becomes long, and cooling efficiency of the stator core 30 can be expected to be improved.

Further, when the cooling oil OL discharged from the tip portion 51 falls downward from the one end 31a of the stator core 30 by the own weight, the cooling oil OL comes into contact with the coil end 35a. Therefore, the coil end 35a is cooled not only by the cooling oil OL supplied from the oil hole Ha (see FIG. 2) but also by the cooling oil OL supplied from the oil hole Hb. Accordingly, the coil end 35a can be more effectively cooled (see FIG. 3).

Here, as shown in FIG. 2, portions other than the coil ends 35a and 35b of the coil 35 are located inside the stator core 30. Therefore, it is difficult to supply the cooling oil OL to a region between the coil ends 35a and 35b in the direction of the rotation axis X.

Therefore, in the stator 3, a temperature of an intermediate region (region in the vicinity of the intermediate line C) between the one end 31a and the other end 31b of the stator core 30 in the direction of the rotation axis X tends to become high.

Here, the entire length L1 of the stator core 30 in the direction of the rotation axis X tends to be long as the specification of the motor 2 becomes a specification to drive the motor 2 on a higher rotation side. Thus, regions of the stator core 30 that are farther away from the coil ends 35a, 35b that are cooled by the cooling oil OL are more difficult to cool. Therefore, it is difficult to cool the vicinity of the intermediate line C in the stator core 30. Further, heat generation due to an iron loss also increases.

In the present embodiment, the oil hole Hb is provided between the one end 31a and the other end 31b of the stator core 30 in the direction of the rotation axis X, specifically, at a position overlapping with the intermediate line C (see FIG. 2). Accordingly, since the cooling oil OL can be supplied to a region in which a temperature is highest in the stator core 30, cooling efficiency of the cooling oil OL is improved.

Hereinafter, a guide portion 500 according to a comparative example will be described. In the following comparative example, only portions different from the present embodiment will be described.

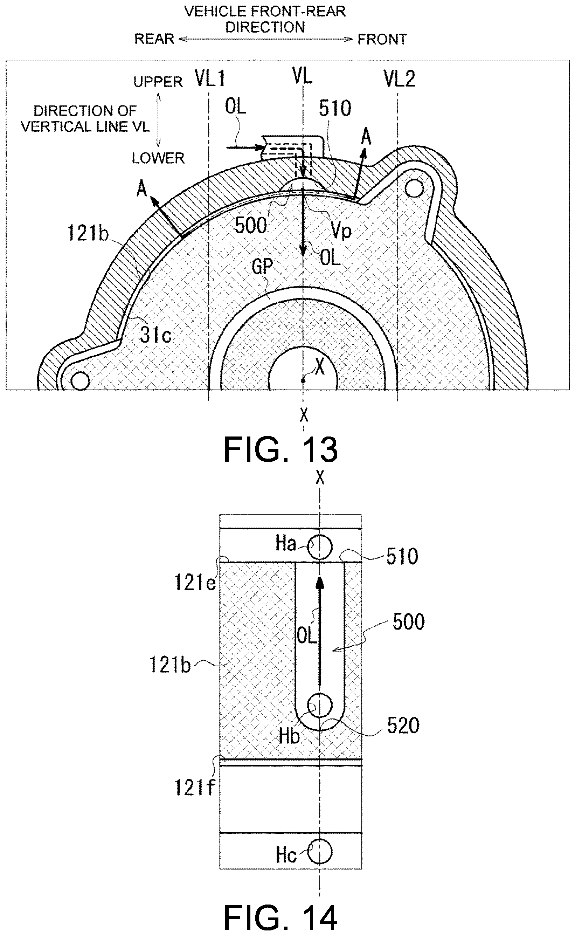

FIG. 13 is a view illustrating the guide portion 500 according to the comparative example.

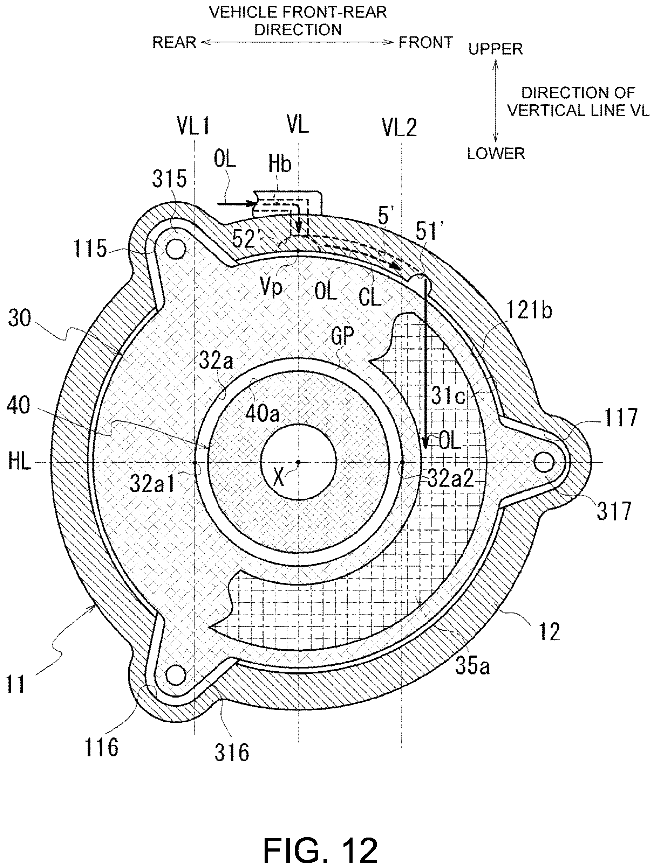

FIG. 14 is a view of the guide portion 500 in FIG. 12 as viewed from a direction of an arrow A-A.

As shown in FIGS. 13 and 14, the guide portion 500 according to the comparative example is a recessed groove having an opening facing the rotation axis X side. The guide portion 500, which is the recessed groove, extends linearly on the rotation axis X. A tip portion 510 of the guide portion 500 is opened in a region in the step surface 121e which intersects with the rotation axis X. A base end portion 520 of the guide portion 500 is provided at a position intersecting with the rotation axis X on the inclined surface 121f side with respect to the oil hole Hb in the direction of the rotation axis X. The tip portion 510 and the base end portion 520 of the guide portion 500 have the same height in the direction of the vertical line VL (see FIG. 13).

As shown in FIG. 13, when viewed from the direction of the rotation axis X, the tip portion 510 of the guide portion 500 is provided at a position overlapping with the vertical line VL passing through the rotation axis X. The tip portion 510 and the base end portion 520 of the guide portion 500 are positioned around the apex Vp of the second inner peripheral surface 121b.

As shown in FIG. 14, the cooling oil OL supplied from the oil hole Hb moves in the guide portion 500 in the direction of the rotation axis X and is guided from the base end portion 520 side to the tip portion 510 side (in an arrow direction in FIG. 14).

Here, since the tip portion 510 and the base end portion 520 of the guide portion 500 have the same height in the direction of the vertical line VL, the cooling oil OL flowing in the guide portion 500 is difficult to accelerate due to an own weight thereof. The cooling oil OL in the guide portion 500 is pushed out by the cooling oil OL sequentially supplied from the oil hole Hb to flow from the base end portion 520 side to the tip portion 510 side.

As shown in FIG. 13, the cooling oil OL discharged from the tip portion 510 of the guide portion 500 falls downward in the direction of the vertical line VL, and finally reaches the air gap GP (in an arrow direction in FIG. 13). In the guide portion 500 according to the comparative example, the cooling oil OL enters the air gap GP, and resistance to rotation of the motor 2 increases.

On the other hand, the guide portion 5 according to the present embodiment includes the tip portion 51 provided outward of the vertical line VL1 in the radial direction of the rotation axis X, so that the cooling oil OL discharged from the tip portion 51 is less likely to enter the air gap GP even if the cooling oil OL falls under the own weight (see FIG. 3). Further, by providing the tip portion 51 below the base end portion 52, the cooling oil OL in the guide portion 5 can be accelerated from the tip portion 51 side to the base end portion 52 side by utilizing the own weight, thereby improving controllability of a flow of the cooling oil OL.

In the present embodiment, a single recessed groove is shown as the guide portion 5, but the guide portion is not limited to this aspect. For example, the guide portion 5 may be a plurality of recessed grooves extending from the oil hole Hb to the step surface 121e. In this case, it is sufficient that each tip portion 51 is located outward of the vertical line VL1 in the radial direction of the rotation axis X.

In the present embodiment, the example in which the base end portion 52 of the guide portion 5 is connected to the oil hole Hb has been described, but the present invention is not limited to this aspect. The base end portion 52 of the guide portion 5 is only required to be located near the oil hole Hb. This also allows most of the cooling oil OL supplied from the oil hole Hb to flow toward the guide portion 5.

Examples of the driving device 1 according to an aspect of the present invention will be listed below.
(1) The driving device 1 (device) includes:
   a motor 2 (rotation electrical machine) including a rotor 4 and a stator 3 surrounding the outer periphery of the rotor 4; and
   the case portion 11 (case) including the peripheral wall portion 12 surrounding the outer periphery of the stator core 30 of the stator 3.

The cooling oil OL (liquid) is supplied to an upper portion of the stator core 30.

The guide portion 5 that is configured to guide the cooling oil OL to one side in the direction of the rotation axis X of the rotor 4 is provided on the second inner peripheral surface 121b of the peripheral wall portion 12 of the case portion 11 in a direction along the rotation axis X.

When viewed from the direction of the rotation axis X, the guide portion 5 is located above the horizontal line HL passing through the rotation axis X.

The air gap GP is provided between the rotor core 40 of the rotor 4 and the stator core 30 in the radial direction of the rotation axis X.

The tip portion 51 on one end side of the guide portion 5 in the direction of the rotation axis X is disposed radially outward of the vertical line VL1 passing through the air gap GP when viewed from the direction of the rotation axis X.

The vertical line VL1 passes through the intersection point 32a1 between the inner peripheral surface 32a of the stator core 30 constituting an outer periphery of the air gap GP and the horizontal line HL.

With this configuration, the resistance to the rotation of the motor 2 can be reduced.

The region of the stator core 30 above the horizontal line HL has the arc shape with the apex thereof facing upward. Therefore, the outer peripheral surface 31c of the stator core 30 has an upwardly convex arc shape.

When viewed from the direction of the rotation axis X, the cooling oil OL supplied to the upper portion of the stator core 30 moves in the circumferential direction around the rotation axis X along the arc-shaped outer peripheral surface 31c, and also moves in the direction of the rotation axis X.

The cooling oil OL that has moved in the circumferential direction around the rotation axis X is prevented from moving in the circumferential direction by the guide portion 5. As a result, a movement direction of the cooling oil OL moving in the circumferential direction around the rotation axis X is changed to the direction of the rotation axis X toward the tip portion 51 of the guide portion 5. The cooling oil OL that has reached the tip portion 51 of the guide portion 5 moves downward in the direction of the vertical line VL from the one end 31a of the stator core 30 due to the own weight. As described above, when viewed from the direction of the rotation axis X, the tip portion 51 of the guide portion 5 is disposed radially outward of the air gap GP of the motor 2 (at the position offset from the air gap GP). Therefore, when the cooling oil OL discharged from the tip portion 51 of the guide portion 5 falls under the own weight, the cooling oil OL falls without crossing the air gap GP.

Therefore, by increasing an amount of the cooling oil OL falling without crossing the air gap GP, the extent to which the cooling oil OL falling from the one end 31a of the stator core 30 enters the air gap GP can be reduced. This can suitably reduce the resistance of the cooling oil OL that has entered the air gap GP to the rotation of the motor 2.

The tip portion 51 of the guide portion 5 is provided at a position not overlapping with the air gap GP in the direction of the vertical line VL1. Here, the vertical line VL1 is separated from the vertical line VL passing through the rotation axis X of the motor 2 in the direction of the horizontal line HL. Therefore, the moving distance of the cooling oil OL flowing along the guide portion 5 is longer than that in the case in which the cooling oil OL flows in the direction of the rotation axis X. Accordingly, the contact time between the cooling oil OL moving along the guide portion 5 and the stator core 30 is longer than that in the case in which the cooling oil OL flows in the direction of the rotation axis X, so that the stator core 30 can be more appropriately cooled.

Further, since the coil end 35a of the motor 2 protrude from the one end 31a of the stator core 30 in the direction of the rotation axis X, the cooling oil OL discharged from the tip portion 51 can be used for cooling the coil end 35a.

(2) When viewed from the radial direction of the rotation axis X, the guide portion 5 is provided in a direction approaching the rotation axis X from the tip portion 51 toward the base end portion 52 on the other end side in the direction of the rotation axis X.

When viewed from the direction of the rotation axis X, the second inner peripheral surface 121b of the case portion 11 has a circular shape.

When viewed from the direction of the rotation axis X, the apex Vp located on the uppermost side in the second inner peripheral surface 121b is a position overlapping with the vertical line VL passing through the rotation axis X.

The base end portion 52 is located above the tip portion 51.

When viewed from the direction of the rotation axis X, the guide portion 5 has a shape that approaches the apex Vp of the second inner peripheral surface 121b of the case portion 11 from the tip portion 51 toward the base end portion 52.

For example, as shown in FIGS. 13 and 14, when the guide portion 500 is provided along the direction of the rotation axis X as viewed from the radial direction of the rotation axis X, both the tip portion 510 on the one end side and the base end portion 520 on the other end side are disposed at positions overlapping with the rotation axis X passing through the apex Vp. When both the tip portion 510 and the base end portion 520 are located around the apex Vp, since the cooling oil OL supplied to the base end portion 520 side flows toward the tip portion 510 along the rotation axis X, the cooling oil OL is unlikely to accelerate due to the own weight, as occurs in the guide portion 5 described above. Therefore, the cooling oil OL in the guide portion 500 is only pushed toward the tip portion 510 by a supply pressure of the cooling oil OL sequentially supplied from the oil hole Hb. Therefore, a speed at which the cooling oil OL moves from the base end portion 520 side to the tip portion 510 side in the guide portion 500 is slower than that in the case of the guide portion 5 in the present embodiment.

Therefore, by configuring as described above and locating the tip portion 51 of the guide portion 5 below the base end portion 52 side in the direction of the vertical line VL when viewed from the direction of the rotation axis X, the cooling oil OL in the guide portion 5 accelerates due to the own weight. As a result, the cooling oil OL flowing through the guide portion 5 flows smoothly toward the tip portion 51.

Accordingly, the controllability of the flow of the cooling oil OL can be improved. Accordingly, a liquid flow control design corresponding to a performance request of the device becomes easy.

(3) The oil holes Ha, Hb, and He (supply holes) through which the cooling oil OL is supplied are opened to the inner peripheral surface 121 of the peripheral wall portion 12 of the case portion 11.

The oil hole Hb is opened to the second inner peripheral surface 121b of the inner peripheral surface 121.

The oil hole Hb includes a part overlapping with the intermediate line C which is a straight line passing through the middle between the one end 31a and the other end 31b of the stator core 30 in the direction of the rotation axis X.

With this configuration, the cooling oil OL can be supplied to the vicinity of a center of the stator core 30 at a highest temperature. This enables the cooling efficiency of the stator core 30 to be improved.

The entire length L1 of the stator core 30 in the direction of the rotation axis X tends to be long as the specification of the motor 2 becomes the specification to drive the motor 2 on the higher rotation side. Therefore, it is particularly effective to supply the cooling oil OL in the vicinity of the center of the stator core 30 for cooling.

(4) The guide portion 5 is the groove provided in the inner periphery of the peripheral wall portion 12 of the case portion 11.

With this configuration, for example, the groove that functions as the guide portion 5 can be provided in the peripheral wall portion 12 of the case portion 11 by post-processing.

Further, by forming the guide portion 5 as the groove, it is possible to freely change a radial groove depth and a shape, as well as an intersection angle of the guide portion 5 with respect to the rotation axis X when viewed from the radial direction, thereby optimizing the guidance of the cooling oil OL.

Here, in the present embodiment, the example in which the recessed groove is provided in the inner periphery of the peripheral wall portion 12 of the case portion 11 has been described for the guide portion 5, but the present invention is not limited to this aspect. For example, a part of the outer peripheral surface 31c of the stator core 30 may be recessed to provide an outer peripheral groove equivalent to the recessed groove.

However, the stator core 30 is formed by stacking electromagnetic steel sheets in several layers. Therefore, in the case in which the outer peripheral groove is provided in the stator core 30, grooves are respectively formed in the electromagnetic steel sheets, and this processing is more difficult than that in the case in which the recessed groove is formed in the peripheral wall portion 12 of the case portion 11 to serve as the guide portion 5. This increases a manufacturing cost.

Therefore, providing the recessed groove in the case portion 11 is easier to process than providing the outer peripheral groove in the outer peripheral surface 31c of the stator core 30, and therefore the manufacturing cost can be reduced.

(6) The guide portion 5 is formed in the tapered shape such that the width W1 (groove width) in the circumferential direction around the rotation axis X becomes narrow from the base end portion 52, which is the other end, to the tip portion 51, which is the one end in the direction of the rotation axis X.

The case portion 11 is formed by casting. A casting direction of the case portion 11 is a direction along the rotation axis X. Therefore, with this configuration, it is easy to cast out the case portion 11 during the casting. The case portion 11 is cast out while being rotated around the rotation axis X along an inclination of the guide portion 5 (straight line Lp1, see FIG. 7).

(8) The oil hole Hb is connected to the base end portion 52 side of the guide portion 5 in the direction of the rotation axis X.

With this configuration, the cooling oil OL supplied from the oil hole Hb is directly supplied to the guide portion 5. Accordingly, the amount of the cooling oil OL entering the air gap GP can be further reduced, and thus the resistance to the rotation of the motor 2 can be reduced.

### (First Modification)

In the above-described embodiment, the case in which the guide portion 5 is the recessed groove provided in the second inner peripheral surface 121b of the peripheral wall portion 12 of the case portion 11 has been described as an example, but the guide of the present invention is not limited to this aspect. The guide portion may have any shape as long as the guide portion can guide the cooling oil OL. The guide portion may be, for example, a guide portion 5A provided with a protrusion protruding from the second inner peripheral surface 121b. In the following first modification, only portions different from the present embodiment will be described.

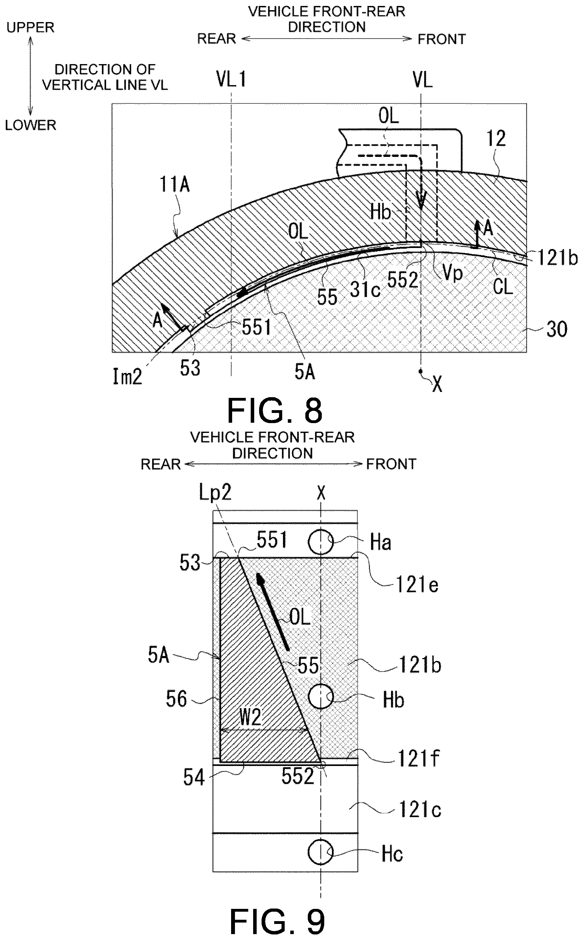

FIGS. 8 and 9 are views illustrating the guide portion 5A according to the first modification.

FIG. 8 is the view illustrating the guide portion 5A when viewed from the direction of the rotation axis X.

FIG. 9 is the view of the guide portion 5A in FIG. 8 when viewed from a direction of an arrow A-A.

As shown in FIG. 8, the guide portion 5A is a protrusion protruding from the second inner peripheral surface 121b of the peripheral wall portion 12 of a case portion 11A. As shown in FIG. 9, when viewed from the radial direction of the rotation axis X, the guide portion 5A is provided in a range extending from the step surface 121e to the inclined surface 121f.

As shown in FIG. 9, the guide portion 5A has a substantially trapezoidal shape. Specifically, the guide portion 5A includes a short wall portion 53 and a long wall portion 54 that are parallel to each other. The short wall portion 53 corresponds to an upper side of the trapezoid, and the long wall portion 54 corresponds to a lower side of the trapezoid. The short wall portion 53 and the long wall portion 54 are orthogonal to the rotation axis X. Further, the guide portion 5A includes connecting wall portions 55 and 56 that connect end portions of the short wall portion 53 and the long wall portion 54. The connecting wall portion 56 is provided parallel to the rotation axis X. The connecting wall portion 55 is provided along a straight line Lp2 intersecting with the rotation axis X. The straight line Lp2 is inclined with respect to the rotation axis X in a direction away from the rotation axis X (toward the vehicle rear side) from the long wall portion 54 side to the short wall portion 53 side in the direction of the rotation axis X.

As shown in FIG. 9, the guide portion 5A has a circumferential width W2 which narrows from the long wall portion 54 toward the short wall portion 53.

The short wall portion 53 is provided flush with the step surface 121e. The connecting wall portion 55 is connected to the short wall portion 53 at one end 551 in a direction of the straight line Lp2. The connecting wall portion 55 is connected to the long wall portion 54 at the other end 552 in the direction of the straight line Lp2. The other end 552 of the connecting wall portion 55 is located on the rotation axis X.

As shown in FIG. 8, when viewed from the direction of the rotation axis X, the guide portion 5A is provided in a direction along a virtual circle Im2 having the rotation axis X as a center thereof.

When viewed from the direction of the rotation axis X, the one end 551 of the connecting wall portion 55 is connected to the short wall portion 53 at a position offset outward from the vertical line VL1 (toward the vehicle rear side) in the radial direction of the rotation axis X. The one end 551 of the connecting wall portion 55 is located lower than the other end 552 in the direction of the vertical line VL.

As shown in FIG. 9, when viewed from the radial direction of the rotation axis X, the connecting wall portion 55 of the guide portion 5A is provided in a direction approaching the rotation axis X from the one end 551 to the other end 552 of the connecting wall portion 55. As shown in FIG. 8, when viewed from the direction of the rotation axis X, the connecting wall portion 55 approaches the apex Vp of the second inner peripheral surface 121b of the case portion 11A from the one end 551 toward the other end 552.

As shown in FIG. 8, the cooling oil OL supplied from the oil hole Hb moves on the outer peripheral surface 31c of the stator core 30 by an own weight thereof. At this time, most of the cooling oil OL on the outer peripheral surface 31c is guided from the other end 552 side to the one end 551 side of the connecting wall portion 55 by the guide portion 5A. As shown in FIG. 9, the cooling oil OL supplied from the oil hole Hb flows along the connecting wall portion 55 in the direction of the straight line Lp2, and is finally discharged from the one end 551 side.

As shown in FIG. 8, when viewed from the direction of the rotation axis X, the one end 551 of the connecting wall portion 55 is located outward of the vertical line VL1 (on the vehicle rear side) in the radial direction of the rotation axis X. Therefore, the more the cooling oil OL is discharged from the one end 551 side of the connecting wall portion 55, the more difficult it becomes for the cooling oil OL, which subsequently falls downward in the direction of the vertical line, to enter the air gap GP. Accordingly, the amount of the cooling oil OL entering the air gap GP can be reduced, and thus the resistance to the rotation of the motor 2 can be reduced.

(5) The guide portion 5A is constituted by the protrusion protruding from the second inner peripheral surface 121b of the peripheral wall portion 12 of the case portion 11A.

With this configuration, when the cooling oil OL that has moved along the connecting wall portion 55 to the one end 31a of the stator core 30 falls in the direction of the vertical line VL due to the own weight, the cooling oil OL falls without crossing the air gap GP of the motor 2. Accordingly, the amount of the cooling oil OL that falls without crossing the air gap GP can be increased. Accordingly, the extent to which the cooling oil OL falling from the one end 31a of the stator core 30 enters the air gap GP can be reduced. This can suitably reduce the resistance of the cooling oil OL that has entered the air gap GP to the rotation of the motor 2.

As described above, the stator core 30 is formed by laminating the plurality of electromagnetic steel sheets. When the outer peripheral groove for guiding the cooling oil OL is provided on the outer peripheral surface 31c of the stator core 30, it is necessary to respectively form the grooves on the electromagnetic steel sheets. In this case, this processing is more difficult than that in the case in which the protrusion is formed on the case portion 11A. This increases a manufacturing cost.

Providing the protrusion on the case portion 11A to form the guide portion 5A is more easily performed than providing the outer peripheral groove in the outer peripheral surface 31c of the stator core 30, and therefore the manufacturing cost can be reduced.

(7) When viewed in the radial direction of the rotation axis X, the guide portion 5A is formed in a shape such that the width W2 in the circumferential direction narrows along the rotation axis X from the long wall portion 54 (one end) to the short wall portion 53 (the other end).

With this configuration, the width W2 of the guide portion 5A can be narrowed along a casting direction of the case portion 11A, and thus the case portion 11A can be easily cast out during the casting.

### (Other Modifications)

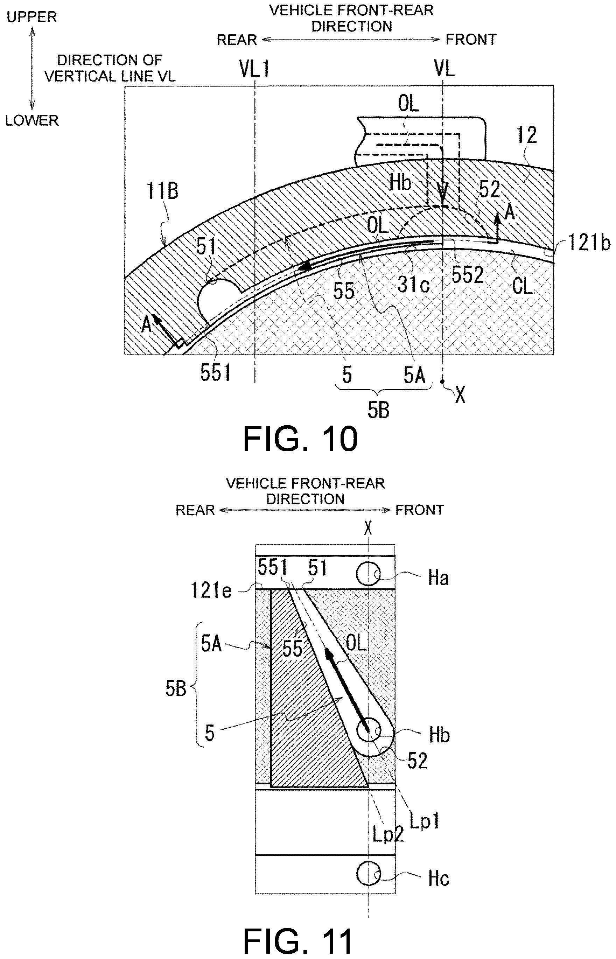

The guide portion 5 (recessed groove) in the above-described embodiment and the guide portion 5A (protrusion) in the first modification may be combined. For example, as shown in FIGS. 10 and 11, the guide portion 5 (recessed groove) and the guide portion 5A (protrusion) may be provided on the peripheral wall portion 12 of a case portion 11B to form one guide portion 5B.

In the guide portion 5B, the cooling oil OL supplied from the oil hole Hb flows along the connecting wall portion 55 of the guide portion 5A, thereby accelerating the flow from the base end portion 52 side to the tip portion 51 side of the guide portion 5A. Accordingly, when the cooling oil OL supplied from the oil hole Hb falls downward in the direction of the vertical line, it becomes difficult for the cooling oil OL to enter the air gap GP. Accordingly, an amount of the cooling oil OL entering the air gap GP can be reduced, and thus resistance to rotation of the motor 2 can be reduced.

For the guide portion 5 according to the present embodiment, the example in which the cooling oil OL is guided to a vehicle rear side relative to the vertical line VL1 has been described. A direction of guiding the cooling oil OL by the guide portion 5 is not limited to this aspect.

The guiding direction of the cooling oil OL can be changed according to positions of the accommodation portions 115 to 117 of the case portion 11.

For example, as shown in FIG. 12, when the accommodation portion 115 is provided above the horizontal line HL and on the vehicle rear side relative to the vertical line VL, a tip portion 51' of a guide portion 5' may be disposed on the vehicle front side relative to the vertical line VL2, that is, outward of the vertical line VL2 in the radial direction of the rotation axis X. The vertical line VL2 is a vertical line passing through an intersection point 32a2 between the inner peripheral surface 32a of the stator core 30 and the horizontal line HL.

Thus, the cooling oil OL supplied from the oil hole Hb is guided to the vehicle front side relative to the vertical line VL2. Accordingly, the amount of the cooling oil OL entering the air gap GP can be reduced, and the resistance to the rotation of the motor 2 can be reduced. Although not shown in the drawings, one equivalent to the guide portion 5A may be provided in place of the guide portion 5' or together with the guide portion 5'.

In the present embodiment, the driving device for a vehicle is shown as an example of the device, but the present invention is not limited to this aspect. The device including the motor can also be applied to a device other than the vehicle.

Although the embodiment of the present invention has been described above, the above embodiment is merely an application example of the present invention and is not intended to limit the technical scope of the present invention to the specific configuration of the above embodiment. The embodiment can be changed as appropriate within the scope of the technical idea of the invention.

### DESCRIPTION OF REFERENCE SIGNS

- 1: driving device (device)

- 2: motor (rotation electrical machine)
- 3: stator
- 4: rotor
- 5: guide portion (groove)
- 5A: guide portion (protrusion)
- 5B: guide portion
- 11: case portion (case)
- 12: peripheral wall portion
- 121b: second inner peripheral surface (inner periphery of case)
- 30: stator core
- 31c: outer peripheral surface (outer periphery of stator core)
- 40: rotor core
- 51: tip portion
- 52: base end portion
- C: intermediate line (straight line passing through middle of stator core)
- GP: air gap
- Hb: oil hole (supply hole)
- HL: horizontal line
- OL: cooling oil (liquid)
- VL1: vertical line (vertical line passing through gap)
- Vp: apex
- X: rotation axis

## Claims

1. A device comprising:
a rotation electrical machine including a rotor and a stator surrounding an outer periphery of the rotor; and
a case surrounding an outer periphery of a stator core of the stator, wherein
a liquid is supplied to an upper portion of the stator core,
a guide portion that is configured to guide the liquid to one side in a direction of a rotation axis of the rotor is provided on an inner periphery of the case in a direction along the direction of the rotation axis,
when viewed from the direction of the rotation axis, the guide portion is located above a horizontal line passing through the rotation axis, and
one end of the guide portion in the direction of the rotation axis is disposed outside a vertical line passing through an air gap between a rotor core of the rotor and the stator core when viewed from the direction of the rotation axis.

2. The device according to claim 1, wherein
when viewed from a radial direction of the rotation axis, the guide portion is provided in a direction approaching the rotation axis from the one end toward an other end, and
when viewed from the direction of the rotation axis, the other end is located above the one end.

3. The device according to claim 2, wherein
a supply hole for the liquid is opened to the inner periphery of the case, and
the supply hole has a part overlapping with a straight line passing through a middle of the stator core in the direction of the rotation axis.

4. The device according to claim 3, wherein
the supply hole for the liquid is connected to the other end side of the guide portion.

5. The device according to any one of claims 1 to 4, wherein
the guide portion is a groove provided in the inner periphery of the case.

6. The device according to any one of claims 1 to 4, wherein
the guide portion is constituted by a protrusion protruding from the inner periphery of the case.

7. The device according to claim 5, wherein
the groove has a shape that narrows from the other end toward the one end.

8. The device according to claim 6, wherein
the protrusion has a shape that narrows from the other end toward the one end.
